## Europäisches Patentamt

## European Patent Office

## Office européen des brevets

(11) Veröffentlichungsnummer: **0 108 829**
**B1**

## (12) EUROPÄISCHE PATENTSCHRIFT

(45) Veröffentlichungstag der Patentschrift:
**12.08.87**

(51) Int. Cl.⁴: **F 16 L 51/02**

(21) Anmeldenummer: **82110552.5**

(22) Anmeldetag: **16.11.82**

(54) **Axialkompensator.**

(43) Veröffentlichungstag der Anmeldung:
**23.05.84 Patentblatt 84/21**

(45) Bekanntmachung des Hinweises auf die Patenterteilung:
**12.08.87 Patentblatt 87/33**

(84) Benannte Vertragsstaaten:
**AT BE CH DE FR GB IT LI NL SE**

(56) Entgegenhaltungen:
**WO-A-82/01759**
**DE-A-2 249 491**
**DE-A-2 620 334**
**DE-A-3 200 842**
**FR-A-1 410 746**
**GB-A-898 383**
**GB-A-1 456 668**
**US-A-2 890 066**
**US-A-2 958 550**
**US-A-3 907 341**

(73) Patentinhaber: **IWK Regler und Kompensatoren GmbH, Singerstrasse, D-7513 Stutensee (DE)**

(72) Erfinder: **Nonnenmacher, Wilfried, Schwarzwaldstrasse 1, D-7537 Remchingen (DE)**

(74) Vertreter: **Lempert, Jost, Dr.rer.nat., Patentanwälte Dr. Ing. Hans Lichti Dipl.- Ing. Heiner Lichti Dipl.- Phys. Dr.rer.nat. Jost Lempert Durlacher Strasse 31 Postfach 410760, D-7500 Karlsruhe 41 (DE)**

LIBER, STOCKHOLM 1987

## Beschreibung

Die Erfindung betrifft einen Axialkompensator zum Einsetzen in eine Rohrleitung, wie eine Fernheizungsleitung, mit mindestens einem Metallbalg, dessen Enden mit jeweils einem Rohrstück verbunden sind, wobei die einander zugewandten Enden der Rohrstücke axial gegeneinander verschiebbare, ineinander greifende Formausbildungen mit jeweils wenigstens drei über den Umfang des Rohrstücks angeordneten Formansätzen und zwischen benachbarten Formansätzen angeordnete Formausnehmungen aufweisen.

In Rohrleitungen, wie Fernheizungsleitungen, werden zwischen zwei Festpunkten ein oder mehrere Kompensatoren eingebaut, um Längenausdehnungen der Rohrleitungen aufzunehmen. Durch den Einsatz von mehr als einem Kompensator können Festpunkte eingespart werden. Es ergibt sich aber hierbei das Problem, daß einer der Kompensatoren bei Längenänderungen im Rohrsystem übermäßig belastet wird, ohne daß zunächst der andere oder die anderen Kompensatoren belastet werden. Um eine Überbelastung auf Zug oder Schub eines Kompensators zu vermeiden bzw. das Auseinanderziehen oder Zusammenschieben eines Kompensators zu begrenzen, werden Anschläge als Hubbegrenzungen vorgesehen. So ist in der WO-A- 82 01 759 ein Axialkompensator vorgesehen, bei dem an einem Rohrstück oder Rohrstutzen zunächst ein ringförmiger Flansch ausgebildet ist, an dem das eine Ende eines flexiblen Balges befestigt ist. Innerhalb des Balges erstreckt sich vom Rohrflansch ein Rohrteil mit einem etwas größeren Innendurchmesser als der Innendurchmesser des Ringflansches. Weiterhin ist an diesem Ringflansch ein den Balg umgebender und schützender Mantel befestigt. Der Balg ist weiterhin mit seinem anderen Ende an einem weiteren Ringflansch befestigt, der ein weiteres Rohrstück umgibt. Auf der dem Befestigungspunkt des Balgs an diesem Flansch entgegengesetzten Seite des Flansches ist gleitend auf dem weiteren Rohrstück ein Ring aufgesetzt, der mit dem Mantel fest verbunden ist. Zur Verdrehsicherung sind auf dem weiteren Rohrstück Schienen befestigt, die mit Nuten den Haltering für den Mantel führen. Beim Zusammendrücken des Balges stößt das weitere Rohrstück mit einem in den Balg hineinragenden Ende am erstgenannten Flansch an. Beim Auseinanderziehen des Balges begrenzt der mit dem Mantel verbundene Ring den Hub.

Bei einer Vorrichtung anderer Art, die als Rohrkupplung verwendet wird (US-A- 2 890 066), sind zwei Kupplungselemente vorgesehen, die an ihren Enden jeweils einen ankerartigen Ausschnitt aufweisen, wodurch bei eingekuppelten Kupplungselementen sich überstehende Ansätze hintergreifen, um die Verbindung herzustellen. Eine konzentrisch die beiden Kupplungselemente umgebende Schiebehülse sichert diese in ihrer sich hintergreifenden Lage gegen radialen Versatz. Kupplungen dieser Art werden bei Rohrleitungen verwendet, die schnell ein- und auszukuppeln sind, können aber weder erheblichen Druck- oder Zugkräfte noch große Torsionskräfte aufnehmen.

Ein gattungsgemäßer Axialkompensator mit einem Metallbalg ist aus der US-A- 2 958 550 bekannt. Dieser Kompensator wird aus Anschlußstücken gebildet, die mit Ausformungen versehen sind. Die Ausformungen sind umfangsseitig mit konstanten gegenseitig angeordneten fingerartigen Fortsätzen mit dazwischen angeordneten komplementären Ausnehmungen versehen. Die ineinandergreifenden Fortsätze verhindern eine gegenseitige Verdrehung der Anschlußstücke bzw. des diese verbindenden Metallbalgs. An der Innenseite der Fortsätze jedes Anschlußstücks ist ein mittels Befestigungsschrauben fixierter Ring angeordnet, auf dessen Außenseite die Fortsätze des anderen Anschlußstücks gleitend geführt sind. Die Ringe wirken als Begrenzungsanschläge beim Auseinanderziehen des Kompensators. Auch hier müssen zur Aufnahme der großen Zug- oder Druckkräfte die Elemente, wie die Flansche, der Mantel sowie der mit diesem verbundene Ring massiv und schwer ausgebildet sein. Dies kann leicht zur Beschädigung oder zum Ausreißen der Ringe führen, so daß die Funktionssicherheit des Kompensators nicht mehr gewährleistet ist.

Ebenfalls müssen zwischen der Vielzahl der einzelnen Elemente, über die die Kräfte übertragen werden, stabile Schweißverbindungen vorgesehen sein. Insbesondere ist aber auch die Umlenkung der Kräfte bei einem solchen Kompensator nachteilig, abgesehen von dem erheblichen konstruktiven Aufwand, wozu auch die separate Verdrehsicherung zählt.

Der Erfindung liegt daher die Aufgabe zugrunde, den zuvor genannten gattungsgemäßen Kompensator so weiterzubilden, daß er fertigungstechnisch einfacher ausgebildet ist und dabei eine funktionssichere Begrenzung für ein Auseinanderziehen des Kompensators aufweist und darüber hinaus alle auftretenden Kräfte direkt ohne Umlenkung übertragen werden.

Erfindungsgemäß wird die genannte Aufgabe dadurch gelöst, daß die Formansätze T-förmig ausgebildet sind und diesen ebenfalls T-förmige Formausnehmungen zugeordnet sind, daß die durch den T-Querbalken der Formausnehmungen bestimmte Tiefe derselben mehr als doppelt so groß wie die Höhe des T-Querbalkens des jeweiligen Formansatzes ist und daß sich die zusammenwirkenden Formansätze und Formausnehmungen gegenseitig hintergreifen, wobei die die auftretenden Kräfte direkt vom einen Rohrstück zum anderen übertragenden Formansätze einstückig mit diesem ausgebildet sind.

Durch diese Formausbildungen an den einander zugewandten bzw. benachbarten Enden der Rohrstücke selbst wird gleichzeitig eine Sicherung gegen zu starkes Zusammendrücken des Balges, zu weites Auseinanderziehen des Balges, also eine Hubsicherung in beiden Richtungen und zusätzlich eine Verdrehsicherung geschaffen. Es sind keine zusätzlichen Kraftübertragungselemente erforderlich, wie beim Stand der Technik, wo diese massiv und stabil ausgebildet sein mußten. Die Kräfte werden insbesondere direkt von einem Rohrstück auf das andere Rohrstück ohne Zwischenelemente übertragen. Dies wird dadurch bewirkt, daß die beiden Rohrenden dabei derart gegeneinander gleitend oder verschiebbar verbunden sind, daß die Querbalken der T-förmigen Ansätze einander hintergreifen, wodurch eine Sicherung gegen zu starkes Auseinanderziehen gewährleistet wird, während beim Zusammenschieben das vordere Ende eines derartigen T-Querbalkens am Boden der entsprechenden Formausnehmung des anderen Rohrstücks anschlägt. Weiterhin wird durch die einstückige Ausbildung der Formansätze und der Rohrstücke neben der Drehsicherung auch eine Übertragung von Radialkräften ohne zusätzliche Kraftübertragungselemente gewährleistet.

Vorzugsweise ist der Balg außerhalb der Rohrstücke angeordnet, grundsätzlich könnte auch eine andersartige Ausgestaltung gewählt werden, bei dem also die Rohrstücke mit ihren Formausbildungen außerhalb des Balges vorgesehen sind. Der Balg kann bei einer koaxial um die Rohrstücke vorgesehenen Ausbildung direkt an diesem befestigt sein, wenn seine äußeren Wellen radial nach innen bis zum Außenumfang der Rohrstücke ragen. Es können aber auch auf den Rohrstücken Ringe befestigt sein, an denen die Enden des Balges festgelegt sind. Diese Ringe können aber klein und damit leicht ausgeführt sein, da sie keine Zug- und Schubkräfte übertragen müssen, sondern lediglich dazu dienen, den Balg zu halten. Um den Balg kann bei einer solchen Ausgestaltung zusätzlich in üblicher Weise ein Mantel vorgesehen sein, der mit dem einen Rohrstück durch einen Ringflansch fest verbunden ist, während er auf Abstandhaltern, die mit dem anderen Rohrstück verbunden sind und beispielsweise auch ringförmig ausgestaltet sein können, bei Bewegungen gleitet.

Durch eine bevorzugte Ausgestaltung, bei der die Tiefe des querbalkenförmigen Bereichs der Formausnehmung der Länge des T-Stegs des Formansatzes entspricht, wird erreicht, daß gleichzeitig die Ansätze beider Rohrstücke an den Böden der Ausnehmungen des entsprechenden anderen Rohrstückes anschlagen, wenn der Kompensator zusammengeschoben ist, so daß nicht nur die Ansätze an einem Rohrstück die Kräfte aufnehmen müssen.

Es hat sich gezeigt, daß ein radiales Versetzen der Rohrstücke gegeneinander auch bei höchsten Belastungen nicht auftritt. Sicherheitshalber kann aber vorgesehen sein, daß im Bereich der Formausbildungen zumindest an einem Rohrstück an der Innen- und/oder Außenwandung des Rohrstücks mindestens ein Ring befestigt ist. Ein solcher Ring ist selbstverständlich nur mit den Ansätzen eines Rohrstücks fest verbunden, während er relativ zu den Ansätzen des anderen Rohrstücks gleitet. Sind mehrere Ringe vorgesehen, so sind diese wechselweise mit dem einen oder anderen Rohrstück verbunden, wobei, soweit benachbarte Ringe auf einer Seite der Rohre, also entweder außen oder innen, was beides möglich ist, angeordnet sind, der Abstand der Länge gerade dem maximal möglichen Hub entspricht. Die Ringe müssen selbst keinerlei Zug- oder Druckkräfte aufnehmen und sind deshalb entsprechend schmal ausgebildet, so daß sie nahezu keinen Widerstand für die Strömung darstellen.

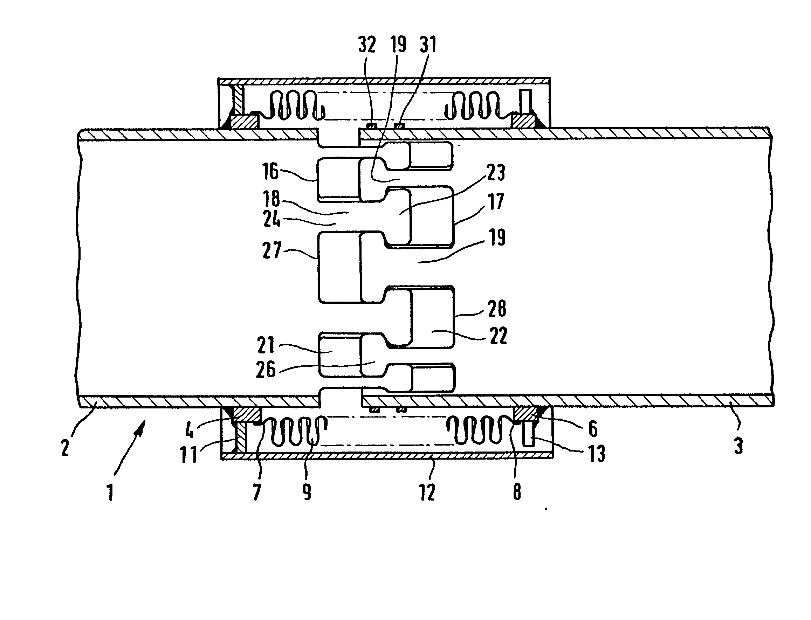

Ein Ausführungsbeispiel des erfindungsgemäßen Axialkompensators wird nashstehend unter Bezugnahme auf die Zeichnung im einzelnen erläutert. Dabei zeigt die einzige Figur
einen erfindungsgemäßen Axialkompensator im Längsschnitt.

Der dargestellte erfindungsgemäße Axialkompensator 1 weist zwei Rohrstücke 2 und 3 auf. Auf den Rohrstücken 2 und 3 sind Ringflansche 4 und 6 aufgesetzt und mit den Rohrstücken verschweißt, an denen wiederum die beiden Enden 7, 8 eines Metallbalgs 9 befestigt sind. Um den Ringflansch 4 ist ein weiterer Ring 11 gelegt, auf dem ein Mantel 12 befestigt ist, der sich von dem Ring 11 über den Balg 9 und über den Ringflansch 6 auf dem Rohrstück 3 hinaus erstreckt. Zur Führung des Mantels 12 sind auf dem Ringflansch 6 Führungsstützen 13 angeordnet, die sich bis unterhalb des Innenumfangs des Mantels 12 nach außen erstrekken. Statt der separat angeordneten Führungsstützen könnte auch ein entsprechender Führungsring um den Ringflansch 6 angeordnet sein. Der Mantel 12 dient zum Schutz des Balges 9.

Die einander benachbarten Enden 16, 17 der Rohrstücke 2, 3 sind mit T-förmig ausgestalteten, sich axial erstreckenden Ansätzen 18, 19 versehen, wobei zwischen jeweils zwei Ansätzen 18 bzw. 19 an einem Rohrende 16, 17 eine Formausnehmung 21, 22 ausgebildet ist. Die Ansätze 18, 19 greifen derart ineinander, daß ein Querbalken 23 eines Ansatzes 18 in eine Ausnehmung 22 eingreift und dabei mit seinen über den Steg 24 hinausragenden Bereichen des Querbalkens 23 die entsprechenden Bereiche eines Querbalkens 26 am anderen Rohrende 17 hintergreift.

Bei der in der Figur gezeigten Stellung ist der Balg auseinandergezogen, wobei die ausei nandergezogene Stellung durch die einander hintergrei fenden Querbalken 23, 26 begrenzt wird, die als wechselseitige Anschläge wirken.

Bei völlig eingeschobener Stellung schlagen die Querbalken an den Böden 27, 28 der Formausnehmungen 21, 22 an und begrenzen so das Zusammenschieben des Kompensators. In beiden Fällen werden die Kräfte linear, ohne jegliche Umlenkung von einem Rohrstück zum anderen Rohrstück übertragen. Gleichzeitig sichern die einander hintergreifenden Ansätze 18, 19 die beiden Rohrstücke 22, 23 und damit den Balg 9 gegen Verdrehungen, wirken also als Torsionssicherung.

Bei der dargestellten Ausführungsform eines Axialkompensators sind noch um die Ansätze 18, 19 herum Ringe 31, 32 vorgesehen, wobei der Ring 32 beispielsweise mit den Ansätzen 19 und der Ring 31 mit den Ansätzen 18 verbunden ist. Obwohl auch ohne solche Ringe ein gegenseitiges Versetzen der Rohrstücke 2, 3 nicht beobachtet wurde, dienen die Ringe als zusätzliche Sicherung. Sie gleiten jeweils auf den Ansätzen des anderen Rohrstücks, wobei sie sich bei der gegenseitigen axialen Bewegung der Rohrstücke 2, 3 nicht behindern, sondern einen solchen axialen Abstand aufweisen, daß der vorgesehene Hub bei Bewegungen voll ausgenutzt wird, ohne das die Ringe sich berühren.

Bezugszeichen-Liste

| | |
|---|---|
| 1 | Axialkompensator |
| 2 | Rohrstück |
| 3 | " |
| 4 | Ringflansch |
| 6 | " |
| 7 | Ende (von 9) |
| 8 | " (von 9) |
| 9 | Metallbalg |
| 11 | Ring |
| 12 | Mantel |
| 13 | Führungsstützen |
| 16 | Enden |
| 17 | " |
| 18 | Ansatz |
| 19 | " |
| 21 | Formausnehmung |
| 22 | " |
| 23 | Querbalken |
| 24 | Steg |
| 26 | Querbalken |
| 27 | Boden |
| 28 | " |
| 31 | Ring |
| 32 | " |

**Patentansprüche**

1. Axialkompensator zum Einsetzen in eine Rohrleitung, wie eine Fernheizungsleitung, mit mindestens einem Metallbalg, dessen Enden mit jeweils einem Rohrstück verbunden sind, wobei die einander zugewandten Enden der Rohrstücke axial gegeneinander verschiebbare, ineinander greifende Formausbildungen mit jeweils wenigstens drei über den Umfang des Rohrstücks angeordneten Formansätzen und zwischen benachbarten Formansätzen angeordnete Formausnehmungen aufweisen,
dadurch gekennzeichnet,
daß die Formansätze (18, 19) T-förmig ausgebildet sind und diesen ebenfalls T-förmige Formausnehmungen (21, 22) zugeordnet sind, daß die durch den T-Querbalken der Formausnehmungen (21, 22) bestimmte Tiefe derselben mehr als doppelt so groß wie die Höhe des T-Querbalkens (23, 26) des jeweiligen Formansatzes (18, 19) ist, und daß sich die zusammenwirkenen Formansätze (18, 19) und Formausnehmungen (21, 22) gegenseitig hintergreifen, wobei die die auftretenden Kräfte direkt vom einen Rohrstück (2 bzw. 3) zum anderen (3 bzw. 2) übertragenden Formansätze (18, 19) einstückig mit diesem ausgebildet sind.

2. Axialkompensator nach Anspruch 1, dadurch gekennzeichnet, daß die Tiefe des querbalkenförmigen Bereichs der Formausnehmung (21, 22) der Länge des T-Stegs (24) des Formansatzes (18, 19) entspricht.

3. Axialkompensator nach einem der vorangehenden Ansprüche, dadurch gekennzeichnet, daß im Bereich der Formausbildungen (18, 19, 21, 22) zumindest an einem Rohrstück (2, 3) an der Innen- und/oder Außenwandung des Rohrstücks (2, 3) mindestens ein Ring (31, 32) befestigt ist.

4. Axialkompensator nach einem der vorangehenden Ansprüche, dadurch gekennzeichnet, daß der Balg (9) mit seinen Enden (7, 8) über ringförmige Flansche (4, 6) mit den jeweiligen Rohrstücken (2, 3) verbunden ist.

**Claims**

1. Axial compensator for inserting in a pipeline, such as a long distance heating line, with at least one metal bellows, whose ends are in each case connected to a pipe section, the facing ends of the pipe sections having axially reciprocally displaceable, interengaging shape constructions with in each case at least three shape attachments arranged over the circumference of the pipe section and shape recesses arranged between adjacent shape attachments, characterized in that the shape attachments (18, 19) are T-shaped and with the same are associated T-shaped shape recesses (21, 22), that the depth defined by the T-cross beams of the shape recesses (21, 22) is more than twice as large as the height of the T-cross beam (23, 26) of the particular shape attachment (18, 19) and that cooperating shape attachments (18, 19) and shape recesses (21, 22) reciprocally engage behind one another and the shape attachments (18, 19) transferring the forces which occur directly from one pipe section (2 or 3) to the other (3 or 2) are constructed in one piece therewith.

2. Axial compensator according to claim 1, characterized in that the depth of the cross beam-like region of the shape recess (21, 22) corresponds to the length of the T-web (24) of shape attachment (18, 19).

3. Axial compensator according to one of the preceding claims, characterized in that at least one ring (31, 32) is mounted in the region of the shape constructions (18, 19, 21, 22) at least at one of the pipe section (2, 3) on the inner and/or outer surface of the pipe section (2, 3).

4. Axial compensator according to one of the preceding claims, characterized in that bellows (9) is connected by its ends (7, 8) via annular flanges (4, 6) to the particular pipe sections (2, 3).

## Revendications

1. Compensateur axial destiné à être inséré dans une canalisation telle qu'une canalisation de chauffage par distribution collective, ce compensateur comportant au moins un soufflet métallique dont les extrémités sont chacune raccordées à un tuyau, les extrémités des tuyaux, qui sont tournées l'une vers l'autre, comportant des éléments profilés pouvant se déplacer axialement l'un contre l'autre, s'engageant l'un dans l'autre et comportant chacun au moins trois saillies profilées disposées sur la périphérie du tuyau, ainsi que des évidements profilés disposés entre des saillies profilées voisines, caractérisé en ce que les saillies profilées (18, 19) sont réalisées en T et, à ces saillies, sont attribués des évidements profilés (21, 22) également en T; la profondeur des évidements profilés (21, 22), qui est déterminée par les barres transversales de leur T, représente plus du double de la hauteur de la barre transversale (23, 26) du T de chaque saillie profilée (18, 19); les saillies profilées (18, 19) et les évidements profilés (21, 22) ccoopérants s'engageant mutuellement l'un derrière l'autre, les saillies profilées (18, 19) qui transmettent directement les forces engendrées d'un tuyau (2 ou 3) à l'autre (3 ou 2) étant réalisées d'une seule pièce avec ce tuyau.

2. Compensateur axial selon la revendication 1, caractérisé en ce que la profondeur de la zone en forme de barre transversale de l'évidement profilé (21, 22) correspond à la longueur de l'âme (24) du T de la saillie profilée (18, 19).

3. Compensateur axial selon une des revendications précédentes, caractérisé en ce que, dans la zone des éléments profilés (18, 19, 21, 22), au moins un anneau (31, 32) est fixé à au moins un tuyau (2, 3) sur la paroi intérieure et/ou la paroi extérieure de ce dernier.

4. Compensateur axial selon une des revendications précédentes, caractérisé en ce que le soufflet (9) est assemblé, à ses extrémités (7, 8) et à l'intervention de brides annulaires (4, 6), à chacun des tuyaux (2, 3).

0 108 829